# EUROPEAN PATENT APPLICATION

(11) **EP 4 361 852 A1**
(43) Date of publication of application: **01.05.2024**
(21) Application number: 23207049.0
(22) Date of filing: 31.10.2023
(51) Int. Cl.: G06F 18/2413, G06V 20/52

(54) **IDENTIFICATION SYSTEM AND METHOD USING TEXT INPUT DATA AND MACHINE LEARNING**

(30) Priority: 31.10.2022 US 202217976923
(71) Applicant: Genetec Inc., Saint-Laurent, QC H4S 2A4 (CA)
(72) Inventor: HERITIER, Maguelonne, Pierrefonds, QC H8Y 2H1 (CA); KIMBER, Helen, Brighton, East Sussex, BN2 9NW (GB)
(74) Representative: Kramer Barske Schmidtchen Patentanwälte PartG mbB

(57) **Abstract**

There is provided a computer-based identification method comprising, at a computing device having at least one machine learning algorithm operating therein, the at least one machine learning algorithm configured to provide an explanation of results produced thereby, receiving text data, the text data providing a textual description relating to an incident involving at least one object, extracting a first plurality of features from the text data, computing one or more similarity metrics between the first plurality of features and a respective second plurality of features, the second plurality of features derived from a plurality of explainability labels produced by the at least one machine learning algorithm, the plurality of explainability labels associated with media data obtained from one or more media devices deployed at one or more locations encompassing a location of the incident, and identifying the incident based on the one or more similarity metrics.

## Description

### CROSS-REFERENCE TO RELATED APPLICATIONS

This patent application claims priority of U.S. application No. 17/976,923 filed October 31, 2022, the entire contents of which are incorporated herein by reference.

### FIELD

The improvements generally relate to the field of identification, and more particularly to computer-implemented systems and methods for identification for use in investigating incidents.

### BACKGROUND

When a witness of an incident provides a witness statement, the witness statement is often uncomplete and contains uncertainties. Using conventional investigation tools, multiple queries would need to be made based on such a statement and a user would be required to sift through numerous images based on the time at which the incident was observed by the witness, the location, or some other criteria. Such a querying and review process may prove time-consuming and prone to errors. The process may become even more cumbersome when multiple witness statements are provided by different witnesses, especially if the statements contain variances or are incomplete. Furthermore, conventional investigation tools generally fail to provide an explanation of the query results produced.

There is therefore room for improvement.

### SUMMARY

The present disclosure describes, among other things, an interactive investigation tool that allows one or more witnesses to provide witness statements related to one or more incidents. The tool may further be used to identify, based on text data associated with the witness statements, one more relevant records, such as license plate recognition (LPR) records from LPR cameras, that match the witness statements and return the results that best match the provided witness statements. The systems and methods described herein may be used for monitoring and surveillance. Other embodiments may apply.

In accordance with one aspect, there is provided a computer-based identification method. The method comprises, at a computing device having at least one machine learning algorithm operating therein, the at least one machine learning algorithm configured to provide an explanation of results produced thereby, receiving text data, the text data providing a textual description relating to an incident involving at least one object, extracting a first plurality of features from the text data, computing one or more similarity metrics between the first plurality of features and a respective second plurality of features, the second plurality of features derived from a plurality of explainability labels produced by the at least one machine learning algorithm, the plurality of explainability labels associated with media data obtained from one or more media devices deployed at one or more locations encompassing a location of the incident, and identifying the incident based on the one or more similarity metrics.

In at least one embodiment in accordance with any previous/other embodiment described herein, receiving the text data comprises receiving one or more witness statements, the one or more witness statements providing information about at least one of a type of the incident, at least one vehicle involved in the incident, a direction of travel of the at least one vehicle, at least one person involved in the incident, and a physical environment within which the incident occurred.

In at least one embodiment in accordance with any previous/other embodiment described herein, receiving the text data comprises receiving information about at least one of physical characteristics and a physical appearance of the at least one person.

In at least one embodiment in accordance with any previous/other embodiment described herein, the media data comprises a plurality of images captured by one or more cameras.

In at least one embodiment in accordance with any previous/other embodiment described herein, each of the plurality of images has associated therewith metadata comprising one or more vehicle characteristics.

In at least one embodiment in accordance with any previous/other embodiment described herein, the media data comprises video footage captured by one or more video cameras.

In at least one embodiment in accordance with any previous/other embodiment described herein, the video footage has metadata associated therewith, the metadata indicative of occurrence, at the one or more monitored locations, of at least one event recorded by the one or more video cameras.

In at least one embodiment in accordance with any previous/other embodiment described herein, the text data provides a textual description of at least one vehicle involved in the incident, and the media data depicts one or more vehicles and/or license plates.

In at least one embodiment in accordance with any previous/other embodiment described herein, the media data is retrieved from a plurality of event occurrence records stored in at least one database and has associated therewith the plurality of explainability labels indicative of an explanation of at least one categorization of the one or more vehicles produced by the at least one machine learning algorithm.

In at least one embodiment in accordance with any previous/other embodiment described herein, the at least one categorization produced by the at least one machine learning algorithm comprises a make and/or a model of the one or more vehicles.

In at least one embodiment in accordance with any previous/other embodiment described herein, identifying the incident comprises identifying, based on the one or more similarity metrics, a given one of the plurality of event occurrence records relating to the incident.

In at least one embodiment in accordance with any previous/other embodiment described herein, identifying the incident comprises identifying at least one of the make and the model of the at least one vehicle involved in the incident using the given one of the plurality of event occurrence records.

In at least one embodiment in accordance with any previous/other embodiment described herein, extracting the first plurality of features comprises applying at least one Natural Language Processing technique to the text data to extract one or more words from the text data.

In at least one embodiment in accordance with any previous/other embodiment described herein, computing the one or more similarity metrics comprises computing at least one score indicative of a similarity between the one or more words and the second plurality of features.

In at least one embodiment in accordance with any previous/other embodiment described herein, the method further comprises assigning a ranking to the one or more similarity metrics, the incident identified based on the ranking.

In at least one embodiment in accordance with any previous/other embodiment described herein, the method further comprises outputting the ranking.

In at least one embodiment in accordance with any previous/other embodiment described herein, the text data provides the textual description relating to the incident involving at least one object, the at least one object identified based on the one or more similarity metrics.

In accordance with another object, there is provided a computer-implemented identification system. The system comprises a processing unit having at least one machine learning algorithm operating therein, the at least one machine learning algorithm configured to provide an explanation of results produced thereby, and a non-transitory computer-readable medium having stored thereon program instructions executable by the processing unit for receiving text data, the text data providing a textual description relating to an incident involving at least one object, extracting a first plurality of features from the text data, computing one or more similarity metrics between the first plurality of features and a respective second plurality of features, the second plurality of features derived from a plurality of explainability labels produced by the at least one machine learning algorithm, the plurality of explainability labels associated with media data obtained from one or more media devices deployed at one or more locations encompassing a location of the incident, and identifying the incident based on the one or more similarity metrics.

In at least one embodiment in accordance with any previous/other embodiment described herein, the program instructions are executable by the processing unit for receiving the text data comprising receiving one or more witness statements, the one or more witness statements providing information about at least one of a type of the incident, at least one vehicle involved in the incident, a direction of travel of the at least one vehicle, at least one person involved in the incident, and a physical environment within which the incident occurred.

In at least one embodiment in accordance with any previous/other embodiment described herein, the program instructions are executable by the processing unit for receiving the text data providing a textual description of at least one vehicle involved in the incident, and the media data depicts one or more vehicles and/or license plates.

In at least one embodiment in accordance with any previous/other embodiment described herein, the program instructions are executable by the processing unit for retrieving the media data from a plurality of event occurrence records stored in at least one database, the media data having associated therewith the plurality of explainability labels indicative of an explanation of at least one categorization of the one or more vehicles produced by the at least one machine learning algorithm.

In at least one embodiment in accordance with any previous/other embodiment described herein, the at least one categorization produced by the at least one machine learning algorithm comprises a make and/or a model of the one or more vehicles.

In at least one embodiment in accordance with any previous/other embodiment described herein, the program instructions are executable by the processing unit for identifying the incident comprising identifying, based on the one or more similarity metrics, a given one of the plurality of event occurrence records relating to the incident.

In at least one embodiment in accordance with any previous/other embodiment described herein, the program instructions are executable by the processing unit for identifying the incident comprising identifying at least one of the make and the model of the at least one vehicle involved in the incident using the given one of the plurality of event occurrence records.

In at least one embodiment in accordance with any previous/other embodiment described herein, the program instructions are executable by the processing unit for extracting the first plurality of features comprising applying at least one Natural Language Processing technique to the text data to extract one or more words from the text data, and the program instructions are executable by the processing unit for computing the one or more similarity metrics comprising computing at least one score indicative of a similarity between the one or more words and the second plurality of features.

Many further features and combinations thereof concerning embodiments described herein will appear to those skilled in the art following a reading of the instant disclosure.

### DESCRIPTION OF THE FIGURES

In the figures,
Fig. 1 is a schematic diagram illustrating an identification system, in accordance with an illustrative embodiment;
Fig. 2A is a schematic diagram illustrating components of the processor of the server system of Fig. 1, in accordance with an illustrative embodiment;
Fig. 2B is a schematic diagram of the identification engine of Fig. 2A, in accordance with an illustrative embodiment;
Fig. 3 is a schematic diagram illustrating use of the system of Fig. 1 to identify records associated with vehicles, in accordance with an illustrative embodiment;
Figs. 4A, 4B, and 4C illustrate an example graphical user interface generated by the system of Fig. 1, in accordance with an illustrative embodiment;
Fig. 5 is a flowchart of an example identification method, in accordance with an illustrative embodiment; and
Fig. 6 is a schematic diagram of an example computing device, in accordance with an illustrative embodiment.

It will be noticed that throughout the appended drawings, like features are identified by like reference numerals

### DETAILED DESCRIPTION

Described herein are computer-implemented identification systems and methods. As will be described further below, the systems and methods described herein may be used as part of an interactive investigation tool that allows one or more witnesses to provide witness statements related to one or more incidents. The tool may further be used to identify the incident by identifying one more relevant records that match the witness statements and return the results that best match the provided witness statements. The systems and methods described herein may be used for a variety of applications. In one embodiment, the systems and methods described herein may be used for monitoring and surveillance. Other embodiments may apply.

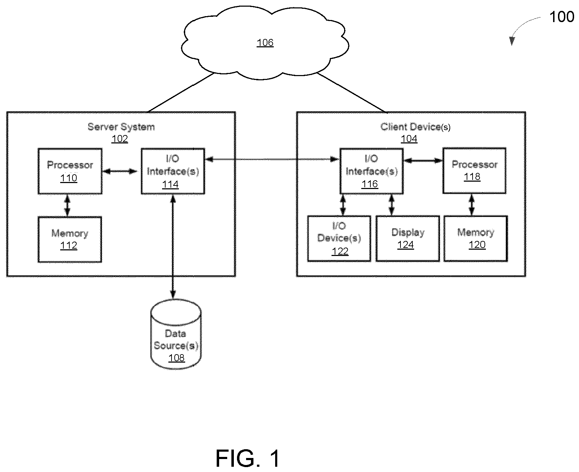

Fig. 1 illustrates an example identification system 100, in accordance with one embodiment. The system 100 comprises a server system 102, which may be a server-based system (as shown in Fig. 1) in communication with one or multiple client devices 104. The server system 102 and/or the client device(s) 104 may, in some embodiments, be configured to access a network 106. The network 106 may comprise any suitable network including, but not limited to, a Personal Area Network (PAN), Local Area Network (LAN), Wireless Local Area Network (WLAN), Metropolitan Area Network (MAN), or Wide Area Network (WAN), or combinations thereof. The server system 102 is also communicatively coupled to one or more data sources 108.

The server system 102 may be internal or "on-site", located in close proximity to a client device 104, for instance in the same building, or may be external or "off-site", located remotely from the client device 104, for instance in a remote data center. The server system 120 may be a cloud-based system.

The server system 102 has at least one processor 110, memory 112, and at least one input/output (I/O) interface 114 for communication with the one or more data sources 108, and/or an I/O interface 116 of the client device 104. The processor 110 may be a general-purpose programmable processor. In the example of Fig. 1, the processor 110 is shown as being unitary, but the processor 110 may also be multicore, or distributed (e.g. a multiprocessor).

The computer readable memory 112 stores program instructions and data used by the processor 110. The computer readable memory 112 may also store locally event occurrence records, acting as a local database. The memory 112 may also store information regarding the data source(s) 108 that are accessible by the server system 102, such as the identity of the data sources 108, the configuration type of the data sources 108, and the like. The computer readable memory 112, though shown as unitary for simplicity in the example of Fig. 1, may comprise multiple memory modules and/or caching. In particular, the memory 112 may comprise several layers of memory such as a hard drive, external drive (e.g. SD card storage) or the like and a faster and smaller Random Access Memory (RAM) module. The RAM module may store data and/or program code currently being, recently being or soon to be processed by the processor 110 as well as cache data and/or program code from a hard drive. A hard drive may store program code and be accessed to retrieve such code for execution by the processor 110 and may be accessed by the processor 110 to store and access data. The memory 112 may have a recycling architecture where older data files are deleted when the memory 112 is full or near being full, or after the older data files have been stored in memory 112 for a certain time.

The I/O interface(s) 114 is in communication with the processor 110. The I/O interface(s) 114 may comprise a network interface and may be a wired or wireless interface for establishing a remote connection with, for example, a remote server, an external data source 108, the client device 104, etc. For instance, the I/O interface(s) 114 may be an Ethernet port, a WAN port, a TCP port, etc. The processor 110, the memory 112 and the I/O interface(s) 114 may be linked via bus connections.

The one or more data sources 108 may be one or more external database(s), one or more external systems, for example, having one or more databases, that are accessible via Application Programming Interface (API) calls, and/or one or more local databases that are part of the server system 102. A data source 108, and in particular a database, may contain one or more records related to event(s) of interest. Such records are referred to herein as "event occurrence records". The data source 108 may further contain any additional information that is relevant or related to the event occurrence records stored therein. As will be discussed further below, the server system 106 is illustratively configured to receive one or more witness statements from the client device(s) 104 and to query the data source(s) 108 to identify relevant event occurrence record(s).

In some embodiments, the data source(s) 108 (or one or more systems, not shown, that manage the data source(s) 108) may be connected to one or more electronic devices (not shown) configured to provide data to the data source(s) 108 (or system(s)), the data source(s) 108 (or system(s)) in turn creating the event occurrence records described further below. The one or more electronic devices may include, but are not limited to, surveillance cameras, license plate recognition (LPR) devices, components of access control systems, and sensors. In some embodiments, the LPR devices may constitute the data source(s) 108. A LPR device may, for example, be a camera unit of the LPR system described in US Patent No. 11,188,776, the entire contents of which are hereby incorporated by reference, or may be any other suitable image processing device.

As used herein, the term "event" refers to an individual occurrence (e.g., an act) that took place in a certain location, at a particular time or during a particular interval of time. As used herein, the term "incident" refers to an event (e.g., crime or accident) observed by an individual, referred to herein as a "witness". As used herein, the term "witness statement" refers to an account made by a witness of facts related to an incident. The witness statement may be provided to an authorized person (e.g., to a police officer, lawyer, private investigator, or the like) in writing or orally, via filling a form or answering questions on a computer system, or the like. In some embodiments, the witness statement is a textual statement (e.g., a body of text containing several phrases formed by a plurality of words or sequences of words). In other words, the witness statement may consist of text data that provides a textual description relating to an incident involving at least one object.

As used herein, the term "occurrence record" or "event occurrence record" refers to information indicative of an event stored or provided by a data source 108 (or memory 112) and that may be accessed or obtained from the data source 108 (or memory 112). The data source 108 may be or may comprise a database that stores occurrence records. The occurrence record has metadata associated therewith, the metadata including, but not limited to, an occurrence record type, a time parameter, and a geographical parameter. In some embodiments, the occurrence record type may be omitted from the occurrence record. This may, for example, be the case when a given data source from which a given occurrence record originates is specific to only one type of occurrence records. In that case, the metadata of the given occurrence record need not include the occurrence record type and the time parameter and the geographical parameter may suffice. The occurrence record may have other metadata and data associated with additional parameters. For instance, when the occurrence record is a LPR record, the metadata associated therewith may comprise a time parameter, a geographical parameter, and a license plate number, as well as various characteristics of the vehicle derived from the image(s) or video captured to form the occurrence record. In another instance, when the occurrence record is a movement record, the metadata associated therewith may comprise a time parameter, a geographical parameter, a direction of movement parameter, an object type parameter, various characteristics of the object (colour, shape, size, identifying characteristics, and the like). The data structure of the occurrence record may depend upon the configuration of the data source 108 and/or database (e.g., memory 112) in which the occurrence record is stored.

As used herein, the term "time parameter" refers to a parameter specifying time, such as a timestamp, a time interval, or a period of time. Each occurrence record may have one or more time parameters associated therewith.

As used herein, the term "geographical parameter" refers to a location, such as Global Positioning System (GPS) coordinates (e.g., coordinates associated with a location at which the event occurred) or a civic address. The geographical parameter may also be a location range or an area defined by a set of coordinates. The geographical parameter may also be a straight-line distance between a location of a given camera having captured an event and the location at which the event occurred. The geographical parameter may further be a radial distance from the given camera's location to the location at which the event occurred. The distances may be specified in any suitable unit of distance such as meters, kilometers, miles, etc. In addition, the geographical parameter may comprise a direction (e.g., cardinal direction) to the location at which the event occurred. Each occurrence record may have one or more geographical parameters associated therewith.

As used herein, the term "occurrence record type" refers to the nature or type of the occurrence record. For example, the occurrence record type may be one of a surveillance video analytics event, a 911 call or computer-aided dispatch (CAD) call, the identity of a known criminal, a gunshot event, a license plate read event, etc. Data sources 108 and/or databases (e.g., memory 112) storing occurrence records may be associated with an occurrence record type.

Examples of event occurrence records thus include, but at not limited to, video footage (e.g., as captured by camera(s) deployed at one or more monitored locations), images of vehicles and/or license plate reads associated with a time parameter and/or a geographical parameter, images of at least one registered person of interest (e.g., a criminal) associated with the person's identity and/or a location parameter, mugshots, 911 call events, CAD events, access control events, etc., associated with a time parameter, a geographical parameter, a narrative (which may be user generated or automatically generated) and/or a priority value (e.g., 911 calls with transcripts), and gunshot events associated with the picking up of a sound that is identified to be a gunshot having a time parameter, a geographical parameter, and/or the identification of the firearm (e.g., gunshots from gunshot detectors such as ShotSpotter^{™}). Although many of the examples in the present disclosure focus on event occurrence records relating to vehicles, the approaches described herein are applicable to other types of event records, including those described hereinabove. In one embodiment, the event occurrence records queried using the systems and methods described herein comprise image-based surveillance records originating form a surveillance system. For example, the event occurrence records comprise images and/or video footage captured by one or more cameras (e.g., video camera(s)) deployed at one or more monitored locations encompassing a location at which an incident under investigation occurred. The event occurrence records may also comprise LPR records that include images of license plates captured by suitable LPR device(s) deployed at the one or more monitored locations.

When the event occurrence records comprise images (e.g., of vehicles and/or of license plates), the images may have associated therewith metadata comprising, but not limited to, at least one of a vehicle license plate number, a license plate state, one or more vehicle characteristics, a time at which the image was captured, a location where the image was captured, and a device the image originated from (e.g., an identifier of a camera having captured the image). When the event occurrence records comprise video footage, such footage may have associated therewith metadata indicative of event(s) occurring in the video footage. The metadata may be obtained subsequent to processing the video footage and performing analytics thereon. The analytics may be performed either in a video surveillance camera, in a LPR camera, or any other suitable computer system. Such metadata may, for example, indicate that a vehicle of a given color is entering a parking lot at a given time. In some embodiments, an event occurrence record may be metadata in a video stream. When the event occurrence records comprise images of registered persons of interest (e.g., registered criminals), the images may have associated therewith metadata comprising, but not limited to, an identify and a location of the registered person of interest. In some embodiments, for each event occurrence record, the metadata may comprise multiple possibilities. For example, if the analytic (e.g., video surveillance camera, LPR camera, or other computer system) that provided the license plate number was unsure about the exact number, more than one license plate number may be provided in the metadata of the corresponding event occurrence record.

As used herein, the term "attribute" refers to a feature or parameter associated with a given witness statement or event occurrence record. As will be described further below, a witness statement may comprise one or more attributes (referred to herein as "witness statement attributes"). In one embodiment, the attributes of a witness statement comprise, but are not limited to, at least one of a time parameter (i.e. a time at which an incident occurred), a location parameter (i.e. a location at which the incident occurred), a type of the incident, information about at least one vehicle involved in the incident, a direction of travel of the at least one vehicle, information about at least one person involved in the incident, and information about a physical environment within which the incident occurred. The information about the at least one vehicle involved in the incident may include, but is not limited to, at least part of a license plate number (i.e., the full license plate number or a few digits thereof), a state associated with the license plate number, a make of the vehicle, a type of the vehicle, a model of the vehicle, a model year of the vehicle, a colour of the vehicle, a condition (e.g., scratches, damage, or the like) of the vehicle, and at least one unique characteristic (e.g., accessories such as a bike rack, hitch, roof rack, spare tire, and the like) of the vehicle. The information about the at least one person involved in the incident may include, but is not limited to, physical characteristics (e.g., height, hair color, eye color, etc.) and a physical appearance (e.g., type of clothing, color of clothing, type of shoes, colors of shoes, glasses, tattoos, scars, and any other identifying mark) of the at least one person. For events involving objects or entities other than persons or vehicles, other attributes may also be collected.

It should be understood that any suitable vehicle type may apply depending on the application. Examples of vehicles include, but are not limited to, cars (e.g., convertible, hatchback, sedan, wagon, coup6, Sport Utility Vehicles or SUV, ...), limousines, sports cars, busses, trucks, consumer trucks, semi-trucks, wagons, vans, minivans, caravans, delivery vans, dump trucks, tractors, scooters, kick scooters, bicycles, motorcycles, snowmobiles, etc. The applicable vehicles are however not limited to land vehicles. For example, railed vehicles (e.g., trains, trams, subways, etc.), watercraft (e.g., ships, boats, canoes, kayaks, yachts, etc.) and/or aircraft (e.g., airplanes, helicopters, etc.) may also apply.

An event occurrence record may also comprise one or more attributes (referred to herein as "event occurrence record attributes"). As previously noted, an event occurrence record may have an occurrence record type (indicative of the type of event), a time parameter, and a geographical parameter associated therewith. Additional attributes, such as vehicle information, environment-related information, or information about individual(s) captured in the record (e.g., at least one physical characteristic and at least one physical appearance), may also apply.

In some embodiments, all event occurrence records stored in the data source(s) 108 (or memory 112) have the same attributes. In other embodiments, the various event occurrence records stored in the data source(s) 108 (or memory 112) may have different attributes. The attributes may also be the same or different across the various witness statements. The witness statement attributes and the event occurrence record attributes may also be the same or different attributes. Some overlap between the witness statement attributes and the event occurrence record attributes is however desirable. Furthermore, when there are multiple witnesses, the witnesses may provide witness statements having different attributes.

As used herein, the term "query" refers to a request for information from a data source as in 108 and/or database (e.g., memory 112). As will be described further below, a query may use text data from witness statement(s). The query may, in some embodiments, include one or more time parameters and one or more geographical parameters associated with the incident, as provided in the witness statement(s). The time parameter may be a defined time or a time range (e.g., that encompasses a time at which an incident reported by a witness occurred). The geographical parameter may be a specific location (e.g. a set of coordinates), or an area (e.g. defined by a plurality of sets of coordinates), to encompass a geographical perimeter around the location at which the incident occurred. The query may specify additional parameters as a function of the event occurrence record type. For instance, when the witness statement(s) indicate that a vehicle is involved in the incident and provide a direction of travel of the vehicle, the additional parameters may include the direction of travel. In some embodiments, the data source(s) 108 (or memory 112) are queried with a time range and/or location range (or perimeter) applied to the time and/or location provided in the witness statements to identify relevant records that occur in the vicinity of the incident and around the time of the incident.

As will be described further below, the query may be performed based on comparing one or more words from the witness statement to explainability labels associated with event occurrence records to identify similarities. The comparison may be performed based on individual witness statements or witness statements as a whole. The query may then return at least one matching event occurrence record from the data source 108 (or memory 112). Based on the at least one matching event occurrence record, an incident to which the query relates may be identified, as well as one or more objects involved in the incident.

A client device 104 may be a remote computing device. One or more client devices 104 may be provided, in close proximity to one another, for instance located in the same office or data center, or remote from one another, for instance located in different offices and data centers dispersed across the same city or in different cities altogether.

The client device 104 is in communication with the I/O interface(s) 114 of the server system 102. The computing device 104 has a processor 118, a memory 120, and I/O interface(s) 116 that may be linked via bus connections. The computing device 104 may have (or be connect to) any suitable I/O device(s) 122, for example, such as a keyboard, a mouse, a touchscreen, etc. The client device 104 may be a desktop computer, a laptop, a smartphone, a tablet, etc. The client device 104 has (or is connect to) a display 124 (e.g. a screen, a tactile display, etc.). The processor 118, the memory 120 and the I/O interface(s) 116 may be similar to the processor 110, the memory 112 and the I/O interface(s) 114, respectively.

A client application program may be stored in memory of the client device 104 that is associated with the server system 102, the client application program providing the user with an interface to interact with the server system 102. The client application program could be a web browser or web application, that is used to interface with the server system 102.

In some embodiments, the server system 102 may include at least one client device 104, where, for instance, the connection between the server system 106 and the client device 104 may be a wired connection. In some embodiments, the functionality of the server system 102 and the client device 104 may be implemented on a single computing device.

The client device 104 may be operated by user(s) (e.g., police officer(s) or other authorized user(s)) to provide one or more witness statements to the server system 102. In some embodiments, the client device 104 may be operated by a law enforcement officer (or other authorized user) to receive the witness statement(s), perform a query for matching event occurrence record(s), and review results. It should however be understood that a witness may operated the client device 104 to provide their witness statement. For example, a first client device 104 may be operated by the witness to provide their statement and a second, different, client device 104 may be operated by the law enforcement officer to perform the query and review results. Using the client device 104, the witness statement(s) may be provided in real-time (i.e. as the witness statement is received by the user) or with a delay (i.e. a predetermined time period after the witness statement is received). The client device 104 may be configured to launch a web browser or web application (not shown) that renders a graphical user interface (GUI) on the display 124. The GUI may be used to display outputs and accept inputs and/or commands from user(s) of the client device 104, as will be described further below.

The system 100 may comprise a wide variety of different network technologies and protocols. Communication between the server system 102, data source(s) 108, and client device 104 may occur across wired, wireless, or a combination of wired and wireless networks. The system 100 may include any number of networking devices such as routers, modems, gateways, bridges, hubs, switches, and/or repeaters, among other possibilities, communicatively coupled to the server system 102, data source(s) 108, client device 104 and/or at any point along network 106.

For purposes of illustration, reference is made herein to a system 100 used for security purposes, such as the identification of a crime associated with a known felon, the identification of a stolen vehicle, or the like. However, it should be understood that the system 100 may be used for any other suitable purpose, such as for identifying at least one person that might have witnessed an incident or for searching for a vehicle in a parking lot based on entrance camera events (e.g., when a person does not remember where he or she parked their vehicle).

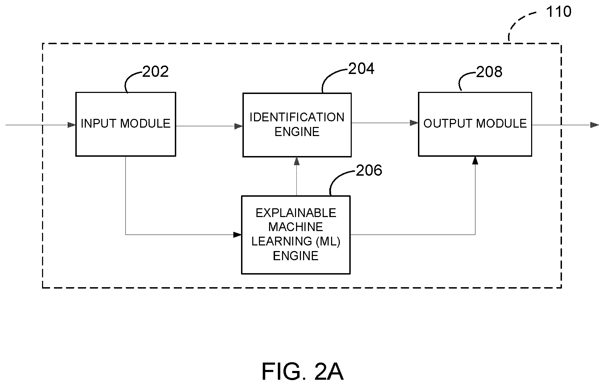

Referring now to Fig. 2A, the processor 110 illustratively comprises an input module 202, an identification engine 204, an explainable machine learning (ML) engine 206, and an output module 208.

The input module 202 is configured to receive data (also referred to herein as "media data") from the data source(s) 108. Such media data may comprise data associated with event occurrence records (e.g., video footage and/or images captured by camera(s) deployed at monitored location(s), LPR records, audio associated with gunshot events, 911 or CAD call events, etc.) provided by the data source(s) 108, sensor data, and any other information relevant or related to the event occurrence records (e.g., metadata such as a time parameter, geographical parameter, license plate number, etc.), as described herein above.

In one embodiment, the explainable ML engine 206 implements one or more ML processes on the media data to produce explainable results based on the media data. The explainable ML engine 206 may implement any suitable ML process, technique or model and any suitable optimization process to minimize a loss function. For instance, artificial neural networks (e.g., a deep neural networks) may apply. In one embodiment, the explainable ML model may be trained in advance, prior to the deployment of the system 100. The explainable ML model may be trained using a training dataset comprising private data set(s) (e.g., the media data received at the input module 202 or any other suitable private data collected by the surveillance system 100 or other related system) or publicly available data set(s). Still other embodiments may apply. For instance, a hybrid approach of training the explainable ML model partly in advance and partly in real-time (e.g., based on live data such as real-time witness statement(s) provided by user(s) via their client device(s) 104) may be used.

In some embodiments, the input module 202 may be configured to process the media data prior to it being used to train the explainable ML model. Such processing may, for example, include a data cleaning process implemented to remove articles, and the like from the text data. Any other suitable processing technique may be used to process the media data so it may be used as a training dataset for the explainable ML model. Furthermore, the parameters of the explainable ML model may be continuously tuned to improve the model's accuracy, for example by enhancing the data fed as input to the model. Machine Learning refinement may occur at different stages of the model and at different time points (e.g., using feedback to refine the explainable ML model after deployment of the system 100).

In one embodiment, the explainable ML model, once trained, is configured to perform a particular task, while producing explainability labels associated with the task, as will be described further below. The explainable ML model may be configured to perform various tasks including, but not limited to, image classification (e.g., assigning a classification to an image or to objects in the image), image detection or identification (e.g., detecting the presence of different types of objects in an image), semantic interpretation (e.g., understanding the meaning of text, such as a CAD call narrative), and interpretation of sensor data such as sound, access control events, etc. In one embodiment, the trained explainable ML model, once trained, operates on the event occurrence records (or the images contained therein) in order to classify the event occurrence records, identify elements of the event occurrence records, detect elements in the event occurrence records, or the like.

As used herein, the term "explainable" (also known as "transparent"), when used in relation to a ML model, refers to the fact that the ML model is able to justify the results it produces with data. As such, the results produced by the explainable ML model include an outcome of the particular task (e.g., vehicle classification and/or identification, person classification, or the like) for which the explainable ML model is trained, as well as a list of constituent elements (referred to herein as "explainability labels") within the outcome which explain how the explainable ML model arrived at the outcome. In other words, the trained explainable ML model outputs the outcome of the task for which it is trained along with one or more explainability labels which provide an indication of the decision-making of the explainable ML model to arrive at the outcome that is provided. For example, the explainable ML model implemented by the explainable ML engine 206 may be trained for classification, such that the results produced by the explainable ML model include one or more predicted classes (i.e. at least one categorization) associated with the event occurrence records and explainability labels providing an explanation or justification for the predicted classes. The event occurrence records may then then tagged with the predicted classes and the explainability labels and the resulting classified event occurrence records (with explainability labels) may be stored in the data source(s) 108, the memory 112, (or any other suitable storage means accessible to the server system 102) for subsequent use by the identification engine 204. In some cases, the explainability labels may also be localized to specific locations within the input (e.g., locations of a photo or video) to indicate which portions of the input resulted in the particular explainability labels. Other approaches to explainability are also considered, but not discussed in detail for the sake of brevity.

In one embodiment, the explainability labels and/or the predicted classes may be indicative of attributes (e.g., a make and/or a model or other categorization) of one or more vehicles depicted in the event occurrence records. The identification engine 204 may then be configured to identify the specific make and/or model of at least one vehicle involved in an incident using the systems and methods described herein. It should however be understood that, in some embodiments, the identification engine 204 may be able to identify a particular vehicle involved in the incident. For example, the identification engine 204 may find the event occurrence record that corresponds to the witness statement and identify the particular vehicle based on uniquely identifying characteristics (e.g., the license plate of the vehicle or the like) thereof found in the event occurrence record. In other embodiments, the explainability labels may be indicative of attributes (e.g., appearance and/or physical characteristics) of at least one person depicted in the event occurrence records. The identification engine 204 may then be configured to identify a person involved in the incident using the systems and methods described herein. In particular, in some embodiments, the identification engine 204 may be used for person re-identification applications in which the identification engine 204 is configured to match a person's identity across different event occurrence records. Other embodiments may apply.

While reference is made herein to the identification engine 204 being used for monitoring, surveillance, and investigation purposes, it should however be understood that this is for illustrative purposes only. As previously noted, the identification systems and methods described herein may be used for various other applications. As such, the explainability labels provided by the explainable ML engine 206 may not only relate to event occurrence records as described herein. One non-limiting example of a possible application is vehicle accessory detection in a car wash system. In order to properly configure a car wash system and prevent damage to the system's equipment, the systems and methods described herein may be used to detect prominent accessories located at the rear of a vehicle. In this case, the explainable ML model implemented by the explainable ML engine 206 may be trained (e.g., based on vehicle images) to detect and identify prominent accessories, as well as to output explainability labels that provide additional information (e.g., the positioning of a prominent accessory on the vehicle) in order to support the detection result.

Still referring to Fig. 2A, the input module 202 is also configured to accept inputs and/or commands from user(s) of the client device 104 (e.g., via a GUI) and the output module 208 is configured to display outputs (e.g., via the GUI) on the display 124 of the client device 104 (and/or to render outputs via any other suitable output device associated therewith). A user may indeed interact with the GUI (and user interface elements, such as buttons, text box elements, pop-up elements, icons, and the like, rendered thereon) using any suitable input device (e.g., mouse, touchscreen, keyboards, etc.) associated with the client device 104, in order to provide their witness statement(s). The input module 202 is configured to receive any input data generated in response to the user interacting with the GUI.

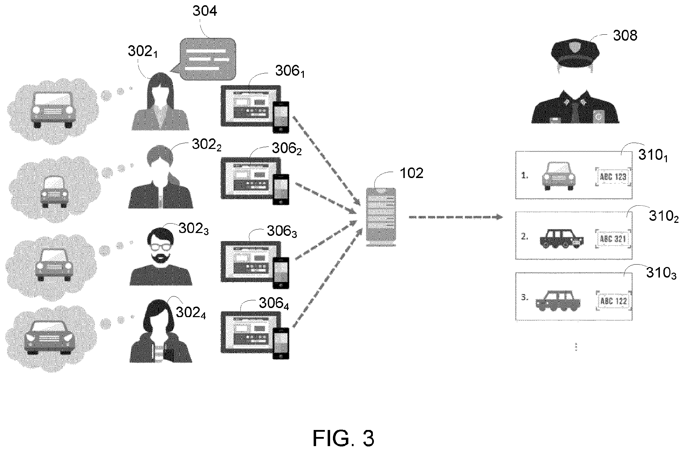

In some embodiments, when multiple witness statements are received, the input module 202 may be configured to combine or group the witness statements. Indeed, it should be understood that a user may provide one or more witness statements using the GUI and that multiple users may access the system 100 (e.g., simultaneously) using their client device 104, such that multiple statements from multiple witnesses may be provided, as illustrated in Fig. 3. When there are multiple witnesses, each witness statement can vary. In the example of Fig. 3, multiple witnesses 302₁, 302₂, 302₃, 302₄ provide different witness statements each comprising text data 304 that provides a textual description relating to an incident. The witness statements may be submitted to the server system 102 using respective client devices 306₁, 306₂, 306₃, 306₄. In the illustrated embodiment, the witness statements are provided by an authorized user 308 (e.g., a police officer) and each witness 302₁, 302₂, 302₃, 302₄ provides, with some variance, a witness statement containing information relating to the incident. In the illustrated embodiment, each witness 302₁, 302₂, 302₃, 302₄ provides information about the color and type of a vehicle involved in the incident.

It should be understood that, while Fig. 3 illustrates that the witness statements from witnesses 302₁, 302₂, 302₃, 302₄ are provided using different client devices 306₁, 306₂, 306₃, or 306₄, all witness statements may be entered into a same client device (e.g., client device 306₁), for example by the authorized user 308. In some embodiments, a witness may enter information related to their witness statement with the assistance of the authorized user 308. This may be particularly useful for impaired or otherwise unable witnesses.

In one embodiment, the input module 202 may be configured to combine the multiple witness statements into a combined witness statement and text data derived from the combined witness statement may then be used to query the data source(s) 108 (or memory 112) to identify (using the identification engine 204 and in the manner that will be described further below) at least one event occurrence record that matches the combined witness statement. In the example of Fig. 3, the multiple witness statements received from the witnesses 302₁, 302₂, 302₃, 302₄ are combined and used by the server system 102 to identify three (3) event occurrence records 310₁, 310₂, 310₃ that match the received witness statements.

In yet other embodiments, the input module 202 may be configured to compare the witness statements (e.g., compare attributes thereof) to identify any anomalous (or outlier) witness statement. A witness statement that diverges (e.g., has notably different attributes) from other witness statements may be considered anomalous. Such an anomalous witness statement may be the result of a bad recollection on behalf of the witness, may be due to the witness' location or field of view relative to the incident, or may be indicative of a malicious effort to provide a misleading witness statement. An indication of the witness statement being anomalous may then be generated for presentation (e.g., via the output module 208) on the display 124 of the client device 104.

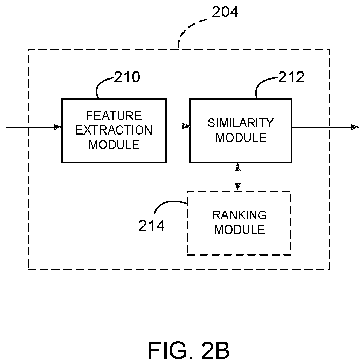

Referring now to Fig. 2B in addition to Fig. 2A, the input module 202 is configured to send to the identification engine 204 a query using the text data derived from the witness statement(s) (i.e. individual statements or witness statements as a whole, such as a combined witness statement or a grouping of witness statements as described herein above) for use in identifying one or more event occurrence records that match the witness statement(s). As will be described further below, the identification engine 204 is configured to match the text data associated with the witness statement(s) to one or more events captured by the surveillance system 100. For this purpose and as illustrated in Fig. 2B, the identification engine 204 comprises, in one embodiment, a feature extraction module 210, a similarity module 212, and an optional ranking module 214.

The feature extraction module 210 is configured to extract one or more features from the text data received from the input module 202. Any suitable technique may be used to extract features from the text data. For example, Natural Language Processing (NLP) may be used. By way of another example, input filtering may be used, for instance based on user selection. The number of features extracted by the feature extraction module 210 may vary depending on the application. In some embodiments, the number of features will be selected to allow the identification engine 204 to derive useful insights from the witness statement(s) for the purpose of assisting in a current investigation.

The one or more features extracted from the text data may be indicative of one or more attributes of the witness statements. For example, the extracted features may be indicative of information about at least one vehicle or at least one person involved in the incident. In one embodiment, the one or more extracted features comprise one or more words (or sequences of words) derived from the text data. The extracted words may comprise words that are relevant or statistically significant to the query (e.g., the investigation) at hand. For example, for text data containing the phrase "I saw a car drive by very fast. It was large, like an SUV, and red. It had a rear-mounted tire, I think it had six spokes.", words such as "car", "red", "large", "SUV", "rear-mounted tire", and "six spokes" may be extracted. It should however be understood that the extracted features may comprise qualitative features related to the incident and/or to one or more objects involved in the incident. For example, qualitative features such as the shape of a vehicle's headlights, the type of grills at the front of the vehicle, embossing on the body of the vehicle, and the like, may be extracted. Other embodiments may apply.

The similarity module 212 is then configured to compute one or more similarity metrics between the feature(s) (e.g. the one or more words) extracted from the text data and respective feature(s) derived from the explainability labels generated by the explainable ML engine 206. Any suitable technique including, but not limited to, using a Euclidean, Minkowski, or other distance calculation, a feature vector distance calculation, or another type of distance calculation, for instance a suitable algorithm, ML technique or model, may be used to compute the similarity metric(s). In some embodiments, the similarity metrics may be computed between the explainability labels themselves and features extracted from the text data.

In some embodiments, the similarity metric(s) comprise one or more distance metrics computed using any suitable technique. The similarity module 212 may therefore be configured to perform a distance calculation between the feature(s) extracted from the text data and the explainability labels. The distance calculation may be performed by calculating an Euclidean distance between a first feature vector formed by the feature(s) extracted from the text data and a second feature vector formed by the feature(s) derived from the explainability labels. For example, when the feature(s) extracted from the text data indicate one or more attributes of a vehicle involved in the incident, the similarity module 212 computes an Euclidean distance between the first feature vector composed of vehicle attributes extracted from the text data and the second feature vector composed of the vehicle attributes determined from the features derived from the explainability labels. Any event occurrence record for which the vehicle attributes have the closest distance metric (i.e. the lowest Euclidean distance) to, and have the greatest similarity with, the vehicle attributes indicated by the features extracted from the text data can be identified as a match with the witness statement. For instance, when the features extracted from the text data indicate that the color of the vehicle involved in the incident is red, the similarity module 212 will identify as a match any event occurrence record for which the vehicle color is red. The Euclidean distance may thus be indicative of a similarity between the extracted feature(s) and the feature(s) derived from the explainability labels, such that computing the similarity metric(s) may comprise computing a score indicative of the similarity. In some embodiments, the similarity module 212 may be configured to evaluate a weighted distance, in which certain features or explainability labels are weighted more heavily than others, leading to the distance being further minimized for the more heavily-weighted features and less minimized for less-heavily-weighted features. The weights may be assigned by a user of the identification system 100, based on historical weights for a particular implementation, or based on the output of a ML model trained to learn preferred weighting for a particular application.

Still referring to Fig. 2B in addition to Fig. 2A, the similarity module 212 is configured to identify, based on the similarity metric(s), at least one event occurrence record that matches the text data from the witness statement(s), and to identify, based on the at least one event occurrence record, the incident to which the text data from the witness statement(s) relates and/or at least one object involved in the incident.

In one embodiment, a ranking may be assigned to the similarity metric(s) computed by the similarity module 212. The ranking may be used by a human to identify the at least one event occurrence record that best matches the witness statements based on the highest ranking similarity metric. For this purpose, the similarity module 212 outputs the similarity metric(s) to the ranking module 214, which may in turn assign the ranking. The closest distance metric (i.e. the distance metric having the smallest value, which may indicate that the features extracted from text data associated with of a given witness statement and the features derived from the explainability labels associated with a given event occurrence record have the greatest similarity) may be assigned the highest ranking, and vice versa. In this case, the ranking may comprise discrete values. For example, the ranking may be from 1 to 5, with 1 being the lowest rank and 5 being the highest rank. It should however be understood that the ranking may be expressed in any other suitable manner. In other embodiments, the ranking module 214 may be configured to compare the distance metrics to a distance threshold and rank the metrics based on the outcome of the comparison to the threshold. For example, distance metrics that are above the distance threshold (which may indicate that the features extracted from text data associated with a given witness statement attribute and the features derived from the explainability labels associated with a given event occurrence record have low similarity) may be assigned a lower ranking than distance metrics that are below the distance threshold. Other embodiments may apply.

In some embodiments, the ranking module 214 may be further configured to output the ranking to the output module 208 for presentation on the display 124 of the client device 104. For example, results with the highest ranking (e.g., rank 5) may be rendered on the display 124. Alternatively, results that are above a given threshold (e.g., the topmost results for which the distance metric is above the distance threshold) may be rendered. Although reference is made herein to the ranking being output, it should be understood that, in other embodiments, a percentage (e.g., a 90% match) may be computed based on the similarity metric to indicate the extent of the match and the percentage may be output by the output module 208. The similarity module 212 may then receive the ranking from the ranking module 214 and identify, based on the ranking, at least one candidate event occurrence record that matches the witness statements. This may, for example, be achieved by selecting, among the displayed records, the event occurrence record having the highest ranking associated therewith. The at least one candidate event occurrence record identified by the similarity module 212 (with or without the ranking from the ranking module 214) is then output (via the output module 208) for validation (e.g., verification and approval) by a human. In other words, a human (e.g., a user, such a police officer or another authorized user of the client device 104) in turn makes a decision based on the results (e.g., candidate matches) produced by the identification engine 204.

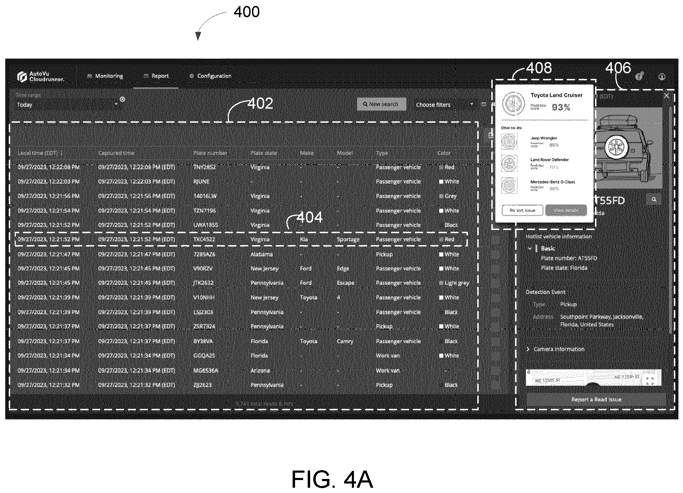

Fig. 4A illustrates an example of a GUI 400 that may be rendered (e.g., on the display 124 of the client device 104) to allow for the identification methods and systems described herein to be achieved. The GUI 400 comprises a first area 402 in which data related to a plurality of event occurrence records (e.g., retrieved from the data source(s) 108 or memory 112) is presented. In the example of Fig. 4A, the data related to the event occurrence records is presented as a table with one or more rows each representative of a given occurrence record and one or more columns each representative of a given attribute associated with the event occurrence record. Any other suitable format may apply. In the example of Fig. 4A, each row is representative of an LPR record and each column is representative of LPR attributes such as the date and time of capture, the license plate number, the state associated with the license plate, the make of the vehicle, the model of the vehicle, the type of the vehicle, and the color of the vehicle. For example, the LPR record detailed in row 404 was captured at 12:21:52 PM (EDT) on September 27, 2023 and relates to a vehicle having license plate number TXC4522 from the state of Virginia, the vehicle being of the Passenger vehicle type, of the Kia make, of the Sportage model, and having red a red color. Although Fig. 4A illustrates LPR records in the first area 402, it should be understood that other data obtained from or related to the event occurrence records, such as images of vehicles captured by surveillance cameras, may also be displayed. The GUI 400 further comprises a second area 406 in which additional details related to each record as in 404 may be provided. For example, information (e.g., identity, IP address, geographic location, etc.) about the surveillance camera from which the LPR record stems may be provided.

As can be seen in Fig. 4A, the GUI 400 also displays a user interface element 408 indicative of an outcome of the identification process performed using the systems and methods described herein. In the example of Fig. 4A, the user interface element 408 is a pop-up element that is overlaid on the areas 402 and 406 of the GUI 400. It should however be understood that the outcome of the identification process may be presented in any suitable manner and at any suitable location on the GUI 400 relative to the areas 402, 406.

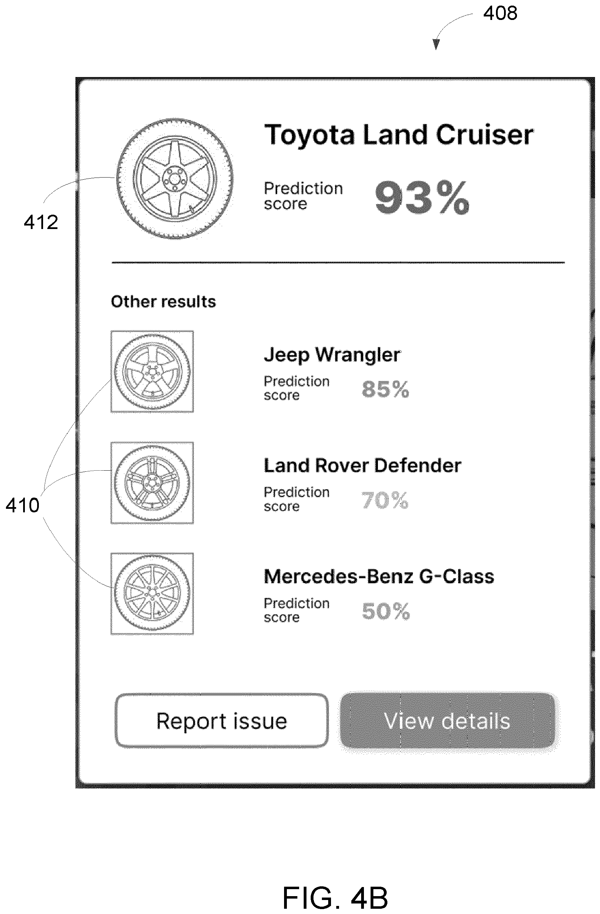

In the example of Fig. 4A, the GUI 400 is used to present the results of the explainable ML model implemented by the explainable ML model 206, in this example identifying the make and model of a vehicle involved in an incident. In this case, the user interface element 408 provides an indication of the make and model of the vehicle involved in the incident, as identified. As seen in Fig. 4B, the identified vehicle is a Toyota Land Cruiser. The user interface element 408 further provides an indication of the explainability labels associated with results of the explainable ML model . In particular, the user interface element 408 presents a percentage (labelled "Prediction score" in Fig. 4B) that is indicative of the level of certainty of the ML model in the identification. As can be seen from Fig. 4B, the prediction score for the Toyota Land Cruiser is 93%, which indicates a 93% certainty of having correctly identified the make and model of the vehicle involved in the event 404. The user interface element 408 further presents a ranking of other results that were a certainty. From Fig 4B it can be seen that other results with a lower certainty include Jeep Wrangler (prediction score of 85%), Land Rover Defender (prediction score of 70%), and Mercedes-Benz G-Class (prediction score of 50%). In the illustrated embodiment, the user interface element 408 further renders an illustrative representation (or icon) 410 depicting, for each candidate result produced by the ML model, at least one explainability label demonstrating a vehicle attribute (in this case the wheel shape attribute) that was a determining factor in identifying the vehicle. A user reviewing the user interface element 408 may therefore readily compare the representation 410 of the vehicle attribute of the lower matches to the representation 412 of the vehicle attribute of the top prediction for verification purposes.

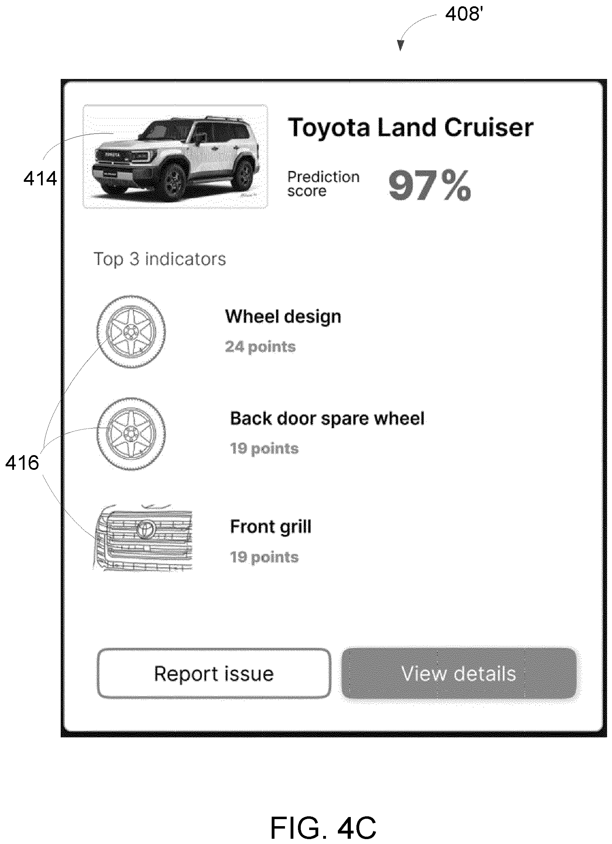

Fig. 4C illustrates another example of a user interface element 408' that may be used to provide an indication of the make and model of the identified vehicle and explainability labels associated with the identification. Similar to the user interface element 408, the user interface element 408' presents a prediction score for the identified vehicle. In this case, the prediction score for the Toyota Land Cruiser is 97%. The user interface element 408' further presents explainability labels associated with the prediction, in this example the top three (3) vehicle attributes (referred to as indicators) that allowed to make the prediction, along with a score for each attribute. In the example of Fig. 408', the top three indicators are the wheel design with a score of 24 points, the back door spare wheel with a score of 19 points, and the front grill with a score of 19 points. In other words, the Toyota Land Cruiser was primarily identified as the vehicle involved in the incident based on finding a top prediction according to the design of its wheels, followed by the fact that it has a back door spare wheel and a front grill as illustrated. In the illustrated embodiment, the user interface element 408' further renders an image 414 of the identified vehicle, as well as illustrative representations (or icons) 416 depicting each of the top three indicators associated with the identified vehicle. A user viewing the user interface element 408' may therefore readily compare the vehicle image 414 and the illustrative representations 416 for verification purposes. Although an image 414 of the identified vehicle is illustrated in Fig. 4C, it should be understood that a sketch of the identified vehicle may alternatively be provided.

In some embodiments, the vehicle attributes used to score the prediction, serving as explainability labels, may be assigned different weights, whether based on user input or based on the results of a training of the explainable ML model to identify which vehicle attributes result in more accurate predictions, for instance on user identification of poor or incorrect predictions. In some cases, the weighting may be associated with the explainability labels more likely to be trusted by a user reviewing the vehicle identification results. Weighted vehicle attributes may affect which explainability labels to present to the user, as well as how the explainable ML model performs the identification of the vehicle, by placing more importance on features more heavily weighted, and less importance on features weighted less heavily.

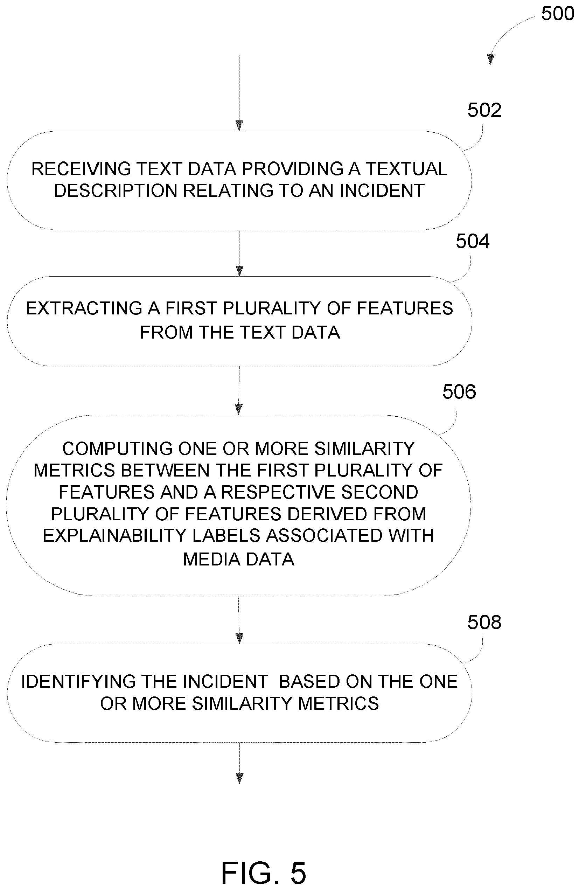

Fig. 5 illustrates an example flowchart of an identification method 500, in accordance with one embodiment. The steps of the method 500 may be performed in the manner described above in relation to Figs. 1 to 4C, using the identification engine 204. Step 502 comprises receiving text data providing a textual description relating to an incident. As described above, the text data may relate to one or more witness statement(s) received from one or more users. Step 504 comprises extracting a first plurality of features from the text data, using the feature extraction module 210 in the manner described above with reference to Fig. 2B. Step 506 comprises computing one or more similarity metrics between the first plurality of features and a respective second plurality of features derived from explainability labels associated with media data. The media data is obtained from one or more media devices deployed at one or more locations encompassing a location of the incident. As described above, the media data may stem from event occurrence records stored in at least one database (e.g., data source(s) 108 or memory 112 of Fig. 1). Step 508 comprises identifying the incident based on the similarity metric(s). Steps 504 and 506 may be performed using the similarity module 212, in the manner described above with reference to Fig. 2B. In some embodiments, a ranking may be assigned to the similarity metric(s) computed at step 506 and the incident may be identified at step 508 based on the ranking. In some embodiments, the ranking may be output along with the identified incident.

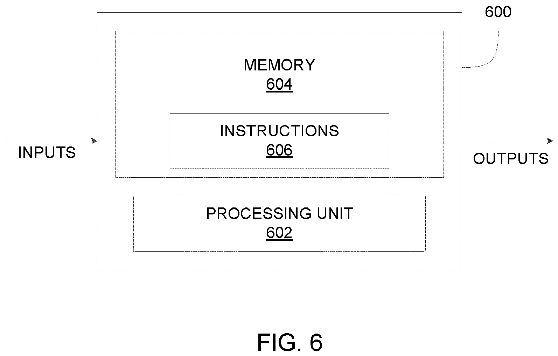

Fig. 6 is a schematic diagram of computing device 600, which may be used to implement the method 500 of Fig. 5. In some embodiments, the computing device 600 may also be used as an alternative implementation for the server system 102 and/or the client device(s) 104 illustrated in Fig. 1. In certain embodiments, the computing device 600 is operable to register and authenticate users (using a login, unique identifier, and password for example) prior to providing access to applications, a local network, network resources, other networks, and network security devices. The computing device 600 may serve one user or multiple users.

The computing device 600 comprises a processing unit 602 and a memory 604 which has stored therein computer-executable instructions 606. The processing unit 602 may comprise any suitable devices configured to implement the functionality of the method 500 such that instructions 606, when executed by the computing device 600 or other programmable apparatus, may cause the functions/acts/steps performed by method 500 as described herein to be executed. The processing unit 602 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitable programmed or programmable logic circuits, custom-designed analog and/or digital circuits, or any combination thereof.

The memory 604 may comprise any suitable known or other machine-readable storage medium. The memory 604 may comprise non-transitory computer readable storage medium, for example, but not limited to, an electronic, magnetic, optical, electromagnetic, infrared, or semiconductor system, apparatus, or device, or any suitable combination of the foregoing. The memory 604 may include a suitable combination of any type of computer memory that is located either internally or externally to device, for example random-access memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like. Memory 604 may comprise any storage means (e.g. devices) suitable for retrievably storing machine-readable instructions 606 executable by the processing unit 602.

In some embodiments, the systems and methods described herein may allow to reduce the time and complexity associated with the record identification process, in addition to reducing errors and removing bias. In particular, the systems and methods described herein provide an explanation of the results produced by the record identification process, which may in turn allow to improve the efficiency and accuracy of the overall process.

The embodiments of the devices, systems and methods described herein may be implemented in a combination of both hardware and software. These embodiments may be implemented on programmable computers, each computer including at least one processor, a data storage system (including volatile memory or non-volatile memory or other data storage elements or a combination thereof), and at least one communication interface.

Program code is applied to input data to perform the functions described herein and to generate output information. The output information is applied to one or more output devices. In some embodiments, the communication interface may be a network communication interface. In embodiments in which elements may be combined, the communication interface may be a software communication interface, such as those for inter-process communication. In still other embodiments, there may be a combination of communication interfaces implemented as hardware, software, and combination thereof.

Throughout the foregoing discussion, numerous references have been made regarding servers, services, interfaces, portals, platforms, or other systems formed from computing devices. It should be appreciated that the use of such terms is deemed to represent one or more computing devices having at least one processor configured to execute software instructions stored on a computer readable tangible, non-transitory medium. For example, a server can include one or more computers operating as a web server, database server, or other type of computer server in a manner to fulfill described roles, responsibilities, or functions.

The foregoing discussion provides many example embodiments. Although each embodiment represents a single combination of inventive elements, other examples may include all possible combinations of the disclosed elements. Thus, if one embodiment comprises elements A, B, and C, and a second embodiment comprises elements B and D, other remaining combinations of A, B, C, or D, may also be used.

The term "connected" or "coupled to" may include both direct coupling (in which two elements that are coupled to each other contact each other) and indirect coupling (in which at least one additional element is located between the two elements).

The technical solution of embodiments may be in the form of a software product. The software product may be stored in a non-volatile or non-transitory storage medium, which can be a compact disk read-only memory (CD-ROM), a USB flash disk, or a removable hard disk. The software product includes a number of instructions that enable a computer device (personal computer, server, or network device) to execute the methods provided by the embodiments.

The embodiments described herein are implemented by physical computer hardware, including computing devices, servers, receivers, transmitters, processors, memory, displays, and networks. The embodiments described herein provide useful physical machines and particularly configured computer hardware arrangements. The embodiments described herein are directed to electronic machines and methods implemented by electronic machines adapted for processing and transforming electromagnetic signals which represent various types of information. The embodiments described herein pervasively and integrally relate to machines, and their uses; and the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

Although the embodiments have been described in detail, it should be understood that various changes, substitutions and alterations can be made herein without departing from the scope as defined by the appended claims.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized. Accordingly, the examples described above and illustrated herein are intended to be examples only, and the appended claims are intended to include within their scope such processes, machines, manufacture, compositions of matter, means, methods, or steps.

## Claims

1. A computer-based identification method, the method comprising :
at a computing device having at least one machine learning algorithm operating therein, the at least one machine learning algorithm configured to provide an explanation of results produced thereby,
receiving text data, the text data providing a textual description relating to an incident involving at least one object;
extracting a first plurality of features from the text data;
computing one or more similarity metrics between the first plurality of features and a respective second plurality of features, the second plurality of features derived from a plurality of explainability labels produced by the at least one machine learning algorithm, the plurality of explainability labels associated with media data obtained from one or more media devices deployed at one or more locations encompassing a location of the incident; and
identifying the incident based on the one or more similarity metrics.

2. The method of claim 1, wherein receiving the text data comprises receiving one or more witness statements, the one or more witness statements providing information about at least one of a type of the incident, at least one vehicle involved in the incident, a direction of travel of the at least one vehicle, at least one person involved in the incident, and a physical environment within which the incident occurred, wherein receiving the text data optionally comprises receiving information about at least one of physical characteristics and a physical appearance of the at least one person.

3. The method of claim 1 or 2, wherein the media data comprises a plurality of images captured by one or more cameras, such as, for example, video footage captured by one or more video cameras.

4. The method of claim 3, wherein each of the plurality of images has associated therewith metadata comprising one or more vehicle characteristics, and/or metadata indicative of occurrence, at the one or more monitored locations, of at least one event recorded by the one or more video cameras.

5. The method of any one of claims 1 to 4, wherein the text data provides a textual description of at least one vehicle involved in the incident, and the media data depicts one or more vehicles and/or license plates.

6. The method of claim 5, wherein the media data is retrieved from a plurality of event occurrence records stored in at least one database and has associated therewith the plurality of explainability labels indicative of an explanation of at least one categorization of the one or more vehicles produced by the at least one machine learning algorithm.

7. The method of claim 6, wherein the at least one categorization produced by the at least one machine learning algorithm comprises a make and/or a model of the one or more vehicles.

8. The method of claim 7, wherein identifying the incident comprises identifying, based on the one or more similarity metrics, a given one of the plurality of event occurrence records relating to the incident.

9. The method of claim 8, wherein identifying the incident comprises identifying at least one of the make and the model of the at least one vehicle involved in the incident using the given one of the plurality of event occurrence records.

10. The method of any one of claims 1 to 9, wherein extracting the first plurality of features comprises applying at least one Natural Language Processing technique to the text data to extract one or more words from the text data.

11. The method of claim 10, wherein computing the one or more similarity metrics comprises computing at least one score indicative of a similarity between the one or more words and the second plurality of features.

12. The method of any one of claims 1 to 11, further comprising assigning a ranking to the one or more similarity metrics, the incident identified based on the ranking, optionally further comprising outputting the ranking.

13. The method of any one of claims 1 to 12, wherein the text data provides the textual description relating to the incident involving at least one object, further wherein the at least one object is identified based on the one or more similarity metrics.

14. A computer-implemented identification system, the system comprising:
a processing unit having at least one machine learning algorithm operating therein, the at least one machine learning algorithm configured to provide an explanation of results produced thereby; and
a non-transitory computer-readable medium having stored thereon program instructions executable by the processing unit for:
receiving text data, the text data providing a textual description relating to an incident involving at least one object;
extracting a first plurality of features from the text data;
computing one or more similarity metrics between the first plurality of features and a respective second plurality of features, the second plurality of features derived from a plurality of explainability labels produced by the at least one machine learning algorithm, the plurality of explainability labels associated with media data obtained from one or more media devices deployed at one or more locations encompassing a location of the incident; and
identifying the incident based on the one or more similarity metrics.

15. The system of claim 14, wherein the program instructions are executable by the processing unit for implementing any of the method steps of any of claims 2 to 13.
